# DEMANDE DE BREVET EUROPEEN

(11) **EP 2 945 468 A1**
(43) Date de publication de la demande: **18.11.2015**
(21) Numéro de dépôt: 15166591.6
(22) Date de dépôt: 06.05.2015
(51) Int. Cl.: H05B 37/00, H05B 37/02, F21S 8/08, F21S 9/03

(54) **DISPOSITIF D'ÉCLAIRAGE D'UN MOBILIER URBAIN ALIMENTÉ PAR UN RÉSEAU EXTÉRIEUR ET PAR UNE ÉNERGIE RENOUVELABLE**

(30) Priorité: 07.05.2014 FR 1454145
(71) Demandeur: Val De Loire Accumulateurs Distribution, 37210 Parcay-Meslay (FR)
(72) Inventeur: Louis, Lionel, 16290 SAINT SATURNIN (FR); Megly, Michel, 37550 SAINT AVERTIN (FR)
(74) Mandataire: Gaillarde, Frédéric F. Ch.

(57) **Abrégé**

Procédé d'alimentation électrique du dispositif électrique d'un mobilier urbain disposant d'une alimentation par un réseau de distribution électrique extérieur (12), caractérisé en ce qu'il comporte une étape de sélection de la source d'énergie entre le réseau de distribution (12), et une centrale interne autonome comportant une batterie (8) rechargée par un système de production d'énergie renouvelable (4), puis une étape de connexion de cette source sélectionnée au reste du dispositif électrique (32).

## Description

La présente invention concerne un procédé d'alimentation électrique du dispositif électrique d'un mobilier urbain, ainsi qu'un dispositif électrique et un mobilier urbain mettant en oeuvre un tel procédé d'alimentation.

Certains mobiliers urbains comprenant un dispositif d'éclairage, en particulier les systèmes d'éclairage comme les lampadaires, sont généralement alimentés par le réseau de distribution d'électricité urbain qui permet de disposer d'un éclairage indépendant des conditions extérieures, et toujours disponible.

On obtient alors un éclairage consommant une électricité produite par une centrale électrique, qui consomme de l'énergie fossile rejetant du gaz carbonique, ou une énergie nucléaire. Ces solutions posent globalement des problèmes de pollution, et de ressource des énergies primaires.

De plus l'approvisionnement par le réseau de distribution d'électricité urbain entraîne un coût relativement important. Le budget de l'éclairage public d'une commune représentant en moyenne 40% de la facture totale d'électricité, constitue généralement le poste le plus élevé de cette facture.

Par ailleurs il est connu d'alimenter du mobilier urbain par une source d'énergie renouvelable, comme des panneaux solaires photovoltaïques, associée à une batterie d'accumulation permettant un certain stockage d'énergie. Cette solution permet d'éviter une consommation d'énergie du réseau urbain, ainsi que les coûts associés. Mais dépendant des conditions extérieures, notamment climatiques, elle ne garantit pas une optimisation de l'énergie disponible et une permanence de l'éclairage, en particulier si on veut utiliser une batterie de taille modérée.

La présente invention a notamment pour but d'éviter ces inconvénients de la technique antérieure.

Elle propose à cet effet un procédé d'alimentation électrique d'un dispositif électrique d'un mobilier urbain disposant d'une alimentation par un réseau de distribution électrique extérieur, caractérisé en ce qu'il comporte une étape de sélection d'une source d'énergie entre le réseau de distribution, et une centrale interne autonome comportant une batterie rechargée par un système de production d'énergie renouvelable, puis une étape de connexion de ladite source d'énergie sélectionnée au reste du dispositif électrique.

Un avantage de ce procédé d'alimentation est qu'en fonction de l'état de charge de la batterie, dépendant de la production d'énergie renouvelable liée généralement aux conditions climatiques, on peut réaliser une optimisation du choix de la source d'énergie permettant d'assurer la consommation d'énergie renouvelable la plus importante possible, et donc une consommation d'énergie venant du réseau de distribution qui est réduite.

On obtient alors à la fois une réduction du coût de l'énergie, ainsi qu'une disponibilité permanente du dispositif électrique, qui dans les cas les plus défavorables peut être assurée par le réseau de distribution.

Le procédé d'alimentation électrique selon l'invention peut comporter de plus une ou plusieurs des caractéristiques suivantes, qui peuvent être combinées entre elles.

Avantageusement, l'étape de sélection de la source d'énergie prend en compte le niveau de charge de la batterie pour opérer cette sélection. On préserve ainsi la durée de vie de la batterie.

En particulier, l'étape de sélection peut éviter pour la batterie un niveau de charge supérieur à un seuil haut, et un niveau de charge inférieur à un seuil bas.

Avantageusement, le procédé d'alimentation électrique comporte une étape d'ajustement de la consommation d'électricité du dispositif électrique en cours de fonctionnement. Cet ajustement permet d'économiser l'énergie de la batterie.

Le procédé selon l'invention peut en particulier être mis en oeuvre pour des dispositifs électrique d'éclairage d'un mobilier urbain tel qu'un lampadaire.

L'étape d'ajustement de la consommation d'électricité peut comporter un ajustement de l'intensité de l'éclairage du dispositif d'éclairage, en fonction de conditions extérieures comprenant au moins un critère parmi le niveau d'éclairage ambiant, l'heure, et le trafic détecté dans la zone à éclairer.

L'invention a de plus pour objet un dispositif électrique d'un mobilier urbain comprenant une alimentation par un réseau de distribution électrique extérieur, ce dispositif électrique comprenant des moyens mettant en oeuvre un procédé d'alimentation électrique comportant l'une quelconque des caractéristiques précédentes.

Le dispositif électrique peut plus particulièrement être un dispositif d'éclairage.

Avantageusement, le dispositif électrique comporte un calculateur de niveau de charge de la batterie. Ce calculateur permet d'optimiser le niveau de charge.

Avantageusement, le dispositif électrique comporte une électronique de gestion de l'hybridation recevant une information de la fonction de contrôle, pour sélectionner la source d'énergie.

Avantageusement, le dispositif électrique comporte un redresseur AC/DC du courant alternatif délivré par le réseau extérieur, qui alimente l'électronique de gestion de l'hybridation. On obtient ainsi un courant continu de même nature que celui délivré par la batterie.

Avantageusement, le dispositif d'éclairage comporte des lampes du type LED réalisant l'éclairage. Ces lampes sont résistantes, et présentent un bon rendement.

Avantageusement, le dispositif d'éclairage comporte des moyens réalisant un allumage partiel des lampes d'éclairage LED. On peut ainsi facilement régler l'intensité lumineuse pour économiser l'énergie.

En particulier le dispositif électrique peut comporter des moyens de fixation sur un mobilier urbain, pour former un sous-ensemble prévu pour se fixer sur ce mobilier en remplacement d'un dispositif électrique précédemment monté dessus. On propose ainsi des kits de remplacement faciles à installer et à mettre en oeuvre.

L'invention a de plus pour objet un mobilier urbain équipé d'un dispositif électrique comportant l'une quelconque des caractéristiques précédentes.

L'invention a plus particulièrement pour objet un mobilier urbain équipé d'un dispositif d'éclairage comportant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma général présentant une tête d'éclairage hybride pour un lampadaire, mettant en oeuvre le procédé suivant l'invention ; et
- les figures 2a à 2d présentent quatre étapes successives de remplacement sur un mobilier urbain, d'une tête d'un lampadaire existant par la tête d'éclairage hybride.

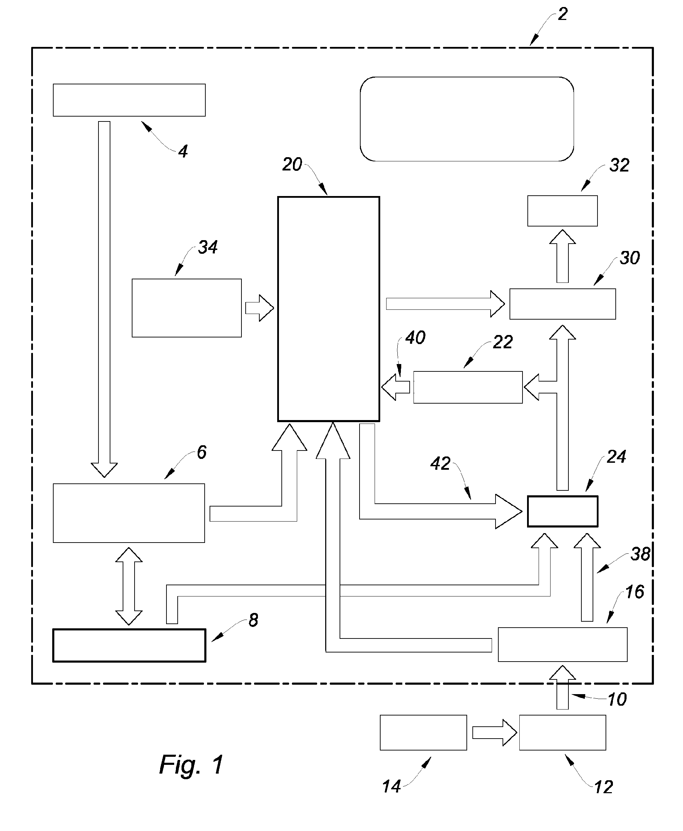

La figure 1 présente une tête d'éclairage hybride 2 destinée à venir en haut d'un lampadaire d'éclairage extérieur, comportant un panneau solaire 4 orienté vers la position moyenne du soleil, qui délivre son énergie électrique à une batterie interne 8 en passant par un calculateur du niveau de charge 6 surveillant en permanence la charge et la décharge de cette batterie.

En variante, ou en complément, on peut utiliser une autre source d'énergie renouvelable, par exemple une éolienne.

En particulier la batterie 8 comportant un ou plusieurs éléments reliés en parallèle ou en série, peut présenter une tension nominale de 12V, ce qui permet d'utiliser des modèles très répandus. Avantageusement on utilise une batterie facilement recyclable, dite écologique ou « verte », ne comportant pas de plomb, de cadmium ou de mercure.

La tête d'éclairage 2 comporte une alimentation externe 10 descendant le long du mât du lampadaire, reliée à un réseau de distribution d'électricité extérieur 12 délivrant un courant alternatif moyenne tension, qui peut être en particulier du 220V.

L'alimentation de l'ensemble des têtes d'éclairage 2 par le réseau d'électricité, par exemple pour éclairer les voies de circulation d'une commune ou d'une entreprise, passe par une commande journalière 14 utilisant par exemple l'heure ou la luminosité ambiante, pour déclencher l'allumage de tous les éclairages quand il est nécessaire.

L'alimentation externe 10 délivre le courant alternatif à un redresseur AC/DC 16, qui le transforme en un courant continu moyenne tension 38 alimentant une électronique de gestion de l'hybridation 24.

L'électronique de gestion de l'hybridation 24 délivre quand il est au repos, le courant continu moyenne tension 38 à un variateur 30 et à un convertisseur DC/DC 22, appelé aussi hacheur ou dévolteur, qui abaisse sa tension pour obtenir un courant continu basse tension 40.

Le convertisseur DC/DC 22 délivre le courant basse tension à une fonction de contrôle 20 comprenant un calculateur de contrôle, qui reçoit une information d'un détecteur de mouvement 34 détectant une présence ou un mouvement dans son champ d'action, par exemple la présence d'un piéton ou d'un véhicule..

Suivant l'information du détecteur de mouvement 34, et d'autres informations comme la luminosité ambiante ou l'horaire, la fonction de contrôle 20 envoie alors une information à un variateur 30, qui ajuste la puissance délivrée à une source lumineuse d'éclairage 32.

Par ailleurs le calculateur du niveau de charge 6 délivre une information du niveau de charge de la batterie 8 à la fonction de contrôle 20. De plus, cette fonction de contrôle 20 reçoit également un courant moyenne tension d'un redresseur AC/DC 16.

Suivant les informations du calculateur de niveau de charge 6, et du redresseur AC/DC 16, la fonction de contrôle 20 envoie une information de commande 42 à une électronique de gestion de l'hybridation 24. Cette électronique de gestion de l'hybridation 24 sélectionne alors avec cette information la source d'énergie qui va alimenter le variateur 30, en établissant alternativement un contact vers le redresseur 16 pour utiliser le courant de l'alimentation externe 10, ou vers le courant d'alimentation interne venant de la batterie 8.

En complément la tête d'éclairage hybride 2 ne fonctionne que si l'alimentation externe 10 est présente.

Le calculateur de niveau de charge 6 est programmé pour, en ajustant le niveau de charge et de décharge de la batterie 8, d'une part obtenir la plus grande quantité d'énergie renouvelable venant du panneau solaire 4, et d'autre part allonger la durée de vie de cette batterie en évitant les niveaux de charge qui entraînent un endommagement plus rapide.

En particulier pour améliorer la durée de vie de la batterie 8, le calculateur de niveau de charge 6 évite un niveau de charge supérieur à un seuil haut, dans ce cas il coupe l'alimentation venant du panneau solaire 4, et un niveau de charge inférieur à un seuil bas, dans ce cas il interdit l'alimentation de l'éclairage à partir de cette batterie en commandant l'électronique de gestion de l'hybridation 24.

On notera qu'avec la possibilité permanente d'utiliser l'énergie du réseau de distribution d'électricité extérieur 12, on peut prévoir une batterie 8 de capacité limitée qui est ajustée aux besoins du lampadaire pour une nuit, sans prévoir de marge de sécurité importante. Dans le cas exceptionnel d'un besoin supérieur, le réseau extérieur 12 pourra toujours fournir le complément d'énergie nécessaire.

On obtient ainsi une alimentation hybride comportant la plus grande part possible d'énergie renouvelable venant du panneau solaire 4, qui est produite de manière économique et écologique, tout en assurant la sécurité des personnes par la possibilité de délivrer dans tous les cas un éclairage.

De plus le détecteur de mouvement 34 mis en option limite les besoins d'éclairage au temps et à l'intensité nécessaire en fonction du trafic détecté, ce qui permet aussi de réduire la capacité de la batterie 8 nécessaire pour passer une nuit.

Par ailleurs on utilise avantageusement pour les sources lumineuses 32 des lampes d'éclairage du type « LED » qui présentent à la fois une consommation d'énergie limitée, une faible taille, un échauffement inexistant, une très bonne solidité et une durée de vie importante.

En particulier on peut disposer dans la source lumineuse 32 une série de lampes LED, et ajuster l'intensité lumineuse globale réglée par le variateur 30, par exemple pour une valeur comprise entre 10 et 100% de la capacité maximale, soit en faisant varier l'intensité du courant, ou soit en allumant un nombre variable de ces diodes.

On obtient avec une combinaison du détecteur de mouvement 34, de la basse consommation des sources lumineuses 32 et de l'ajustement du niveau d'intensité de l'éclairage, la meilleure optimisation de la consommation d'énergie. De plus un ajustement de l'intensité et du temps d'éclairage réduit la pollution lumineuse des villes, qui sont entourées la nuit d'un halo lumineux.

On notera par ailleurs les avantages suivants des lampes LED installées dans la source lumineuse 32. Chaque lampe peut être orientée de manière individuelle en fonction de la zone à éclairer, ce qui augmente l'uniformité de l'intensité de l'éclairage sur cette zone et réduit les espaces obscurs, avec une consommation d'énergie limitée.

Le rendement des lampes LED permet une économie d'énergie d'environ 60 à 90% par rapport aux lampes au sodium, au mercure ou à incandescence conventionnelle, et de 10 à 20% par rapport aux ampoules basse consommation.

Les estimations ont montré que par rapport aux lampes au sodium, la consommation réduite d'électricité sur un réseau de distribution urbain entraîne une baisse sur la facture d'énergie d'environ 65%.

On notera que la durée de vie des lampes LED comprise entre 50 000 et 100 000h, permet une durée de vie supérieure à 17 ans pour un éclairage en moyenne de 8h par jour. Ces lampes sont de plus très peu sensibles aux fortes variations de température, aux vibrations, et se cassent difficilement, à la différence des autres lampes conventionnelles.

La durée de vie du dispositif d'éclairage complet comprenant les lampes LED est estimée entre 10 et 12 ans. En raison de leur durée de vie élevée, les lampes LED permettent d'éviter des interruptions de service, et de réduire les frais de maintenance pour leur remplacement. Elles sont particulièrement intéressantes pour les points d'éclairage comportant des accès difficiles ou dangereux, et entraînant des coûts élevés, notamment sur des ponts ou à des hauteurs importantes.

La faible consommation des lampes LED permet aussi lors de l'installation d'un nouveau mobilier urbain de réduire le coût des câbles d'alimentation électrique de ce mobilier, en utilisant des conducteurs, notamment en cuivre, de section réduite grâce à l'intensité du courant nécessaire qui est plus faible.

Le voltage réduit des lampes LED ainsi que l'énergie calorifique quasiment nulle dégagée offrent une grande sécurité d'installation et d'utilisation. La qualité du rendement chromatique est importante, sans utiliser de filtre qui entraîne une perte de luminosité. De plus elles n'émettent pas de rayon infrarouge ou ultraviolet, et conviennent parfaitement pour l'éclairage de monuments historiques ou de plantations, sans risquer de les endommager.

Par ailleurs la multiplicité des points d'éclairage d'une même source lumineuse, permet de réaliser des effets décoratifs. On notera enfin que les lampes LED atteignent rapidement l'intensité lumineuse nominale, même pour des températures extérieures très basses.

De préférence le dispositif d'éclairage utilise des matériaux facilement recyclables, comme de l'aluminium, qui de plus est léger.

On notera aussi que la relative autonomie en énergie de chaque point d'éclairage, peut permettre d'optimiser les pics et les creux de consommation sur un même réseau de distribution d'électricité.

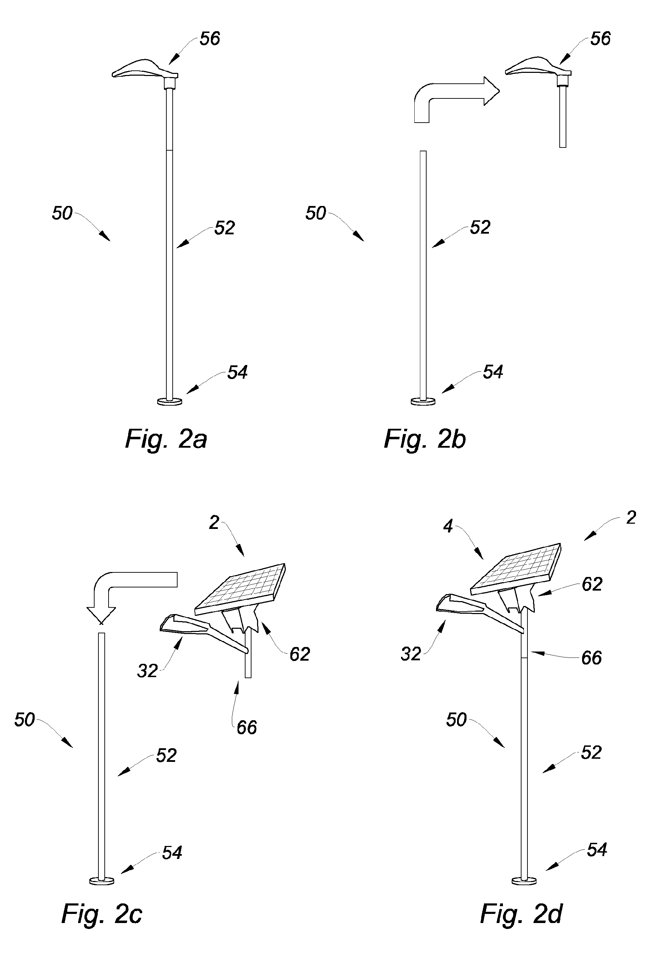

La figure 2a présente un lampadaire 50 déjà installé au bord d'une voirie, comportant un mât 52 fixé au sol par un pied 54, équipé à son sommet d'une lampe à incandescence 56 disposant d'un réflecteur tourné vers le bas.

La figure 2b présente une première étape d'un procédé de transformation du lampadaire existant, comportant la découpe du sommet du mât 52 pour retirer une petite partie supérieure supportant la lampe 56.

La figure 2c présente une deuxième étape comprenant la préparation d'un kit de transformation du lampadaire, formant un sous-ensemble 68 comportant une tête d'éclairage hybride 2 équipée de panneaux solaires 4, d'une batterie 8, la batterie 8 ainsi que toute l'électronique étant protégées dans un boîtier 62 disposé en-dessous de ce panneau, de lampes LED 32 installées sous un réflecteur, et d'un pied 66 prévu pour être fixé en haut du mât 52.

La figure 2d présente la fixation du pied 66 du sous-ensemble 68 ou kit de transformation 68 en haut du mât 52, puis le raccordement électrique des fils déjà installés dans ce mât pour l'éclairage précédent, à la tête d'éclairage hybride afin de lui apporter le courant du réseau extérieur.

On obtient ainsi de manière rapide et avec des coûts réduits, sans travaux d'infrastructure comme la fixation d'un mât au sol, ou la pose de câbles d'alimentation du réseau extérieur nécessitant généralement la réalisation de tranchées dans le sol, un nouveau lampadaire économique et écologique.

## Revendications

1. - Procédé d'alimentation électrique d'un dispositif électrique d'un mobilier urbain (50) disposant d'une alimentation par un réseau de distribution électrique extérieur (12), **caractérisé en ce qu'**il comporte une étape de sélection d'une source d'énergie entre le réseau de distribution (12), et une centrale interne autonome comportant une batterie (8) rechargée par un système de production d'énergie renouvelable (4), puis une étape de connexion de ladite source d'énergie sélectionnée au reste du dispositif électrique (32).

2. - Procédé d'alimentation électrique selon la revendication 1, **caractérisé en ce que** l'étape de sélection de la source d'énergie prend en compte le niveau de charge de la batterie (8) pour opérer cette sélection.

3. - Procédé d'alimentation électrique selon la revendication 2, **caractérisé en ce que** l'étape de sélection évite pour la batterie (8) un niveau de charge supérieur à un seuil haut, et un niveau de charge inférieur à un seuil bas.

4. - Procédé d'alimentation électrique selon l'une quelconque des revendications précédentes, **caractérisé en ce qu'**il comporte une étape d'ajustement de la consommation d'électricité du dispositif électrique (32) en cours de fonctionnement.

5. - Procédé d'alimentation électrique selon l'une quelconque des revendications précédentes, **caractérisé en ce qu'**il est mis en oeuvre dans un dispositif d'éclairage d'un mobilier urbain.

6. - Procédé d'alimentation électrique selon la revendication 5, **caractérisé en ce que** l'étape d'ajustement de la consommation d'électricité comporte un ajustement de l'intensité de l'éclairage en fonction de conditions extérieures comprenant au moins un critère parmi le niveau d'éclairage ambiant, l'heure, et le trafic détecté dans la zone à éclairer.

7. - Dispositif électrique d'un mobilier urbain (50) comprenant une alimentation par un réseau de distribution électrique extérieur (12), **caractérisé en ce qu'**il comporte des moyens mettant en oeuvre un procédé d'alimentation électrique selon l'une quelconque des revendications précédentes.

8. - Dispositif électrique selon la revendication 7, **caractérisé en ce qu'**il comporte un calculateur de niveau de charge (6) de la batterie (8).

9. - Dispositif électrique selon la revendication 8, **caractérisé en ce qu'**il comporte une électronique de gestion de l'hybridation (24) recevant une information de la fonction de contrôle 20, pour sélectionner la source d'énergie.

10. - Dispositif électrique selon la revendication 9, **caractérisé en ce qu'**il comporte un redresseur AC/DC (16) du courant alternatif délivré par le réseau extérieur (12), qui alimente l'électronique de gestion de l'hybridation (24).

11. - Dispositif électrique selon l'une quelconque des revendications 7 à 10, **caractérisé en ce qu'**il est un dispositif d'éclairage d'un mobilier urbain (50).

12. - Dispositif électrique selon la revendication 11, **caractérisé en ce qu'**il comporte des lampes du type LED réalisant l'éclairage.

13. - Dispositif électrique selon la revendication 12, **caractérisé en ce qu'**il comporte des moyens (30) réalisant un allumage partiel des lampes d'éclairage LED.

14. - Dispositif électrique selon l'une quelconque des revendications 7 à 13, **caractérisé en ce qu'**il comporte des moyens de fixation (66) sur un mobilier urbain (50), pour former un sous-ensemble (68) prévu pour se fixer sur ce mobilier en remplacement d'un dispositif électrique (32) précédemment monté dessus.

15. - Mobilier urbain équipé d'un dispositif électrique, **caractérisé en ce que** le dispositif électrique est réalisé selon l'une quelconque des revendications 7 à 14.
